# EUROPEAN PATENT APPLICATION

(11) **EP 4 592 459 A1**
(43) Date of publication of application: **30.07.2025**
(21) Application number: 23867796.7
(22) Date of filing: 17.04.2023
(51) Int. Cl.: E03B 1/00, G06Q 50/08

(54) **PIPELINE GROUPING DEVICE, PIPELINE GROUPING METHOD, AND PIPELINE GROUPING PROGRAM**

(30) Priority: 22.09.2022 JP 2022151392
(71) Applicant: KUBOTA CORPORATION, Osaka-shi, Osaka 556-8601 (JP)
(72) Inventor: OCHI, Takatoshi, Amagasaki-shi, Hyogo 660-0095 (JP); OKUMURA, Yuta, Amagasaki-shi, Hyogo 660-0095 (JP)
(74) Representative: Müller-Boré & Partner Patentanwälte PartG mbB
(86) International application number: PCT/JP2023/015290
(87) International publication number: WO 2024/062665

(57) **Abstract**

A pipeline grouping apparatus including a grouping control unit configured to group a plurality of pipelines constituting a pipe network based on a prescribed indicator is provided. The apparatus includes: an overlapping group extraction unit configured to extract groups whose polygons are overlapping each other from groups grouped by the grouping control unit, each of the polygons encompassing pipelines belonging to a same group; an overlapping area calculation unit configured to calculate an overlapping area between overlapping polygons extracted by the overlapping group extraction unit; and an update control unit configured to regroup, by the grouping control unit, pipelines encompassed by the overlapping polygons if the overlapping area calculated by the overlapping area calculation unit satisfies a first specified condition.

## Description

### Technical Field

The present invention relates to a pipeline grouping apparatus, a pipeline grouping method, and a pipeline grouping program that group pipelines constituting a pipe network such as waterworks.

### Background Art

In piping work, such as replacement of an existing pipeline with a new pipeline, where pipelines with high renewal priority lie scattered, a worker sets (groups) piping work sections including the pipelines with high renewal priority so as not to decrease work efficiency.

Conventionally, a worker operates a terminal to associate each pipeline with a pipe network managed by computer mapping based on experience, thereby grouping a part of the pipe network into a plurality of pipeline groups. However, such grouping operation is very complicated and requires a certain amount of time and effort, and there is also a problem that the grouping results lack reproducibility.

Patent Literature 1 has proposed a hydraulic analysis method that sets a velocity coefficient for each pipeline constituting a pipe network prior to hydraulic analysis of the pipe network.

The hydraulic analysis method is characterized in that a pipe network configured with a number of pipelines is divided into a plurality of groups each including pipelines determined to have an equivalent degree of hydraulic influence; a plurality of assumed values is set for each group, the assumed values being numerical values of the degree of hydraulic influence predicted that the pipelines belonging to each group can have; a calculated value of hydraulic head at a given water demand point in the pipe network is determined based on each of the plurality of assumed values; an actual value of the hydraulic head at the water demand point in the pipe network is measured; and the assumed value with the smallest variance value between the calculated value and the actual value of the hydraulic head is respectively selected from the plurality of assumed values given to each group, thereby obtaining a combination of these selected assumed values.

Further, in the hydraulic analysis method, grouping criteria for the pipelines determined to have the equivalent degree of hydraulic influence are specified as pipelines having a pipe type, an installation period, and a diameter in common with each other.

Patent Literature 2 has proposed an extraction system in which a plurality of computers extracts an unsuppliable section from a supply system consisting of pipes and valves across a plurality of meshes.

The extraction system includes: an equipment data retention means for retaining data on equipment such as the pipes and valves; a storage means for storing information regarding a boundary node indicating an intersection between a boundary of the mesh and the pipe; an attribute assignment means for assigning an attribute to the boundary node; and an extraction means for extracting an unsuppliable section from the supply system by using the attribute assigned by the attribute assignment means.

The equipment data retention means is for the plurality of computers to retain the equipment data on a divided area, the storage means is for all of the plurality of computers to retain the information regarding the boundary node, and any of the computers functions as the attribute assignment means or the extraction means.

### Citation List

### Patent Literature

Patent Literature 1: Japanese Unexamined Patent Application Publication No. 2008-57142
Patent Literature 2: Japanese Unexamined Patent Application Publication No. 2001-282891

### Summary of Invention

### Technical Problem

Patent Literature 1 discloses a grouping method according to a pipeline attribute such as a pipe type, an installation period, and a diameter. Furthermore, Patent Literature 2 discloses a method for extracting an unsuppliable section from a supply system per mesh unit using a valve as a boundary.

However, none of the literatures disclose a method for automatically setting (grouping) an optimal work section that does not decrease work efficiency in piping work, such as replacement of an existing pipeline with a new pipeline, where pipelines with high renewal priority lie scattered.

Furthermore, when a worker manually operates a computer mapping system based on experience to perform grouping, there is a problem of being unable to evaluate suitability of the results thereof, and it is difficult to group an entire large-scale pipe network managed by municipalities, etc. at once and evaluate the results thereof.

In view of the above-described problems, an object of the present invention is to provide a pipeline grouping apparatus, a pipeline grouping method, and a pipeline grouping program that are capable of automatically grouping a plurality of pipelines constituting a pipe network and updating the grouping process based on the results of evaluation of such grouping.

### Solution to Problem

To achieve the above-described object, a pipeline grouping apparatus is provided according to the present invention. As a first feature of the pipeline grouping apparatus, the pipeline grouping apparatus includes a grouping control unit configured to group a plurality of pipelines constituting a pipe network based on a prescribed indicator and further includes: an overlapping group extraction unit configured to extract groups whose polygons are overlapping each other from groups grouped by the grouping control unit, each of the polygons encompassing pipelines belonging to a same group; an overlapping area calculation unit configured to calculate an overlapping area between overlapping polygons extracted by the overlapping group extraction unit; and an update control unit configured to regroup, by the grouping control unit, pipelines encompassed by the overlapping polygons if the overlapping area calculated by the overlapping area calculation unit satisfies a first specified condition.

The grouping control unit groups a plurality of pipelines constituting a pipe network into a plurality of groups based on a prescribed indicator. The overlapping group extraction unit extracts, as evaluation targets, a plurality of groups whose polygons are overlapping each other, where each of the polygons encompasses pipelines belonging to the same group. The overlapping area calculated by the overlapping area calculation unit is used to evaluate whether the grouping is good or not. If the overlapping area satisfies the first specified condition, the grouping control unit regroups the pipelines included in the overlapping groups.

**In** addition to the first feature above, the pipeline grouping apparatus has a second feature that the overlapping area calculation unit includes a process of calculating coordinates of an intersection of the overlapping polygons based on position information on the pipelines present on an outline of each of the polygons.

Since the installation information on each pipeline constituting the pipe network is known, the outlines of polygons each encompassing the pipelines belonging to the same group can be determined. Thus, based on the position information on the pipelines present on the outlines of polygons, it is possible to calculate the coordinates of intersections of overlapping polygons, which in turn makes it possible to calculate the overlapping area.

In addition to the first feature above, the pipeline grouping apparatus has a third feature that the first specified condition is defined by an area ratio of an area of an overlapping region to an area of a polygon with a smaller area of two overlapping polygons extracted by the overlapping group extraction unit.

The area ratio of the area of the overlapping region to the area of the polygon with the smaller area is used as a condition for determining whether to regroup the pipelines. This allows for an appropriate regrouping process.

In addition to any one of the first to third features above, the pipeline grouping apparatus has a fourth feature that the prescribed indicator is any of a total pipeline length, an installation cost, an elevation difference, a dynamic pressure gradient, or a residual chlorine level of pipelines constituting a group.

The use of the total pipeline length of pipelines constituting a group as a reference indicator for grouping allows for appropriately adjusting the scope of construction work for each group required for reinstallation or other construction work. The use of the installation cost of pipelines constituting a group as a reference indicator for grouping allows for appropriately adjusting the construction cost for each group required for reinstallation or other construction work. The use of any of the elevation difference, dynamic pressure gradient, or residual chlorine level of pipelines constituting a group as a reference indicator for grouping allows for dividing the pipelines into groups in a manner that permits block-wise water distribution, where the water distribution pressure and residual chlorine level can be adjusted appropriately.

In addition to the first feature above, the pipeline grouping apparatus has a fifth feature that the prescribed indicator is a total pipeline length or an installation cost of pipelines constituting a group, the pipeline grouping apparatus further includes: a base point setting unit configured to set a base point for grouping to any of a plurality of pipelines to be grouped based on pipeline information, the pipeline information associating pipeline identification information for individually identifying each pipeline constituting the pipe network with pipeline attribute information including position information on each pipeline; and a polygon generation unit configured to repeat a process of generating a polygon of a prescribed shape encompassing one pipeline including the base point and a candidate pipeline adjacent to the base point until a preset second specified condition is satisfied, and once the second specified condition is satisfied, group each pipeline encompassed by the polygon into a same group, and the grouping control unit is configured to control to repeat update setting of a new base point for grouping to any of a plurality of ungrouped pipelines adjacent to the base point via the base point setting unit, and execution of the polygon generation unit based on the updated and set base point each time one grouping is completed by the polygon generation unit until all the pipelines constituting the pipe network and subject to grouping are grouped into any group.

The pipeline information is prepared in advance, by associating the pipeline identification information for individually identifying each pipeline constituting the pipe network with the pipeline attribute information including the position information on each pipeline. In the base point setting unit, the base point for grouping is set to any of a plurality of pipelines to be grouped; in the polygon generation unit, the process of generating the polygon of the prescribed shape encompassing one pipeline including the base point and the candidate pipeline adjacent to the base point is repeated until the preset specified indicator is satisfied, and once the specified indicator is satisfied, each pipeline encompassed by the polygon is grouped into the same group. The grouping control unit controls to execute the update setting of a new base point for grouping to any of a plurality of ungrouped pipelines adj acent to the base point via the base point setting unit, and repeat the execution of the polygon generation unit based on the updated and set base point each time one grouping is completed by the polygon generation unit until all the pipelines constituting the pipe network and subject to grouping are grouped into any group. In this manner, grouping of the pipelines constituting the pipe network is automated.

A pipeline grouping method is also provided according to the present invention. As a feature of the pipeline grouping method, the pipeline grouping method is for executing a grouping control process of grouping a plurality of pipelines constituting a pipe network based on a prescribed indicator and includes: an overlapping group extraction process of extracting groups whose polygons are overlapping each other from groups grouped by the grouping control process, each of the polygons encompassing pipelines belonging to a same group; an overlapping area calculation process of calculating an overlapping area between overlapping polygons extracted by the overlapping group extraction process; and an update control process of regrouping, by the grouping control process, pipelines encompassed by the overlapping polygons if the overlapping area calculated by the overlapping area calculation process satisfies a first specified condition.

A pipeline grouping program is also provided according to the present invention. As a feature of the pipeline grouping program, the pipeline grouping program causes a computer to execute a grouping method for grouping a plurality of pipelines constituting a pipe network and includes: a grouping control process of grouping the plurality of pipelines based on a prescribed indicator; an overlapping group extraction process of extracting groups whose polygons are overlapping each other from groups grouped by the grouping control process, each of the polygons encompassing pipelines belonging to a same group; an overlapping area calculation process of calculating an overlapping area between overlapping polygons extracted by the overlapping group extraction process; and an update control process of regrouping, by the grouping control process, pipelines encompassed by the overlapping polygons if the overlapping area calculated by the overlapping area calculation process satisfies a first specified condition.

### Advantageous Effects of Invention

As described above, the present invention can provide a pipeline grouping apparatus, a pipeline grouping method, and a pipeline grouping program that are capable of automatically grouping a plurality of pipelines constituting a pipe network and updating the grouping process based on the results of evaluation of such grouping.

### Brief Description of Drawings

Fig. 1 illustrates a pipeline grouping apparatus according to the present invention.
Fig. 2A illustrates a pipe network to be grouped, and Fig. 2B illustrates a grouped pipe network.
Fig. 3 is a flowchart illustrating a procedure of a pipeline grouping method executed using the pipeline grouping apparatus.
Fig. 4A illustrates relation between a unit pipeline and a pipeline unit, and Fig. 4B illustrates a pipeline unit configured by combining unit pipelines.
Fig. 5A illustrates a pipeline to be grouped first with respect to a base point V1, Fig. 5B illustrates a pipeline to be grouped next, and Fig. 5C illustrates a pipeline to be grouped that is determined based on an area increment.
Fig. 6A illustrates a pipeline to be grouped next, and Fig. 6B illustrates a pipeline to be grouped that is determined based on an area increment.
Fig. 7A illustrates a base point V1' to be updated and set after a base point V1, and Fig. 7B illustrates a base point V1" to be newly updated and set after completion of the grouping process for the base point V1'.
Fig. 8A illustrates pipelines before being grouped, Fig. 8B illustrates pipelines with a small overlapping area between grouped polygons, Fig. 8C illustrates pipelines with a large overlapping area between grouped polygons, and Fig. 8D illustrates regrouped pipelines.

### Best Mode for Carrying out the Invention

Hereinafter, a pipeline grouping apparatus, a pipeline grouping method, and a pipeline grouping program according to the present invention will be described based on the drawings.

### [Configuration of Pipeline Grouping Apparatus]

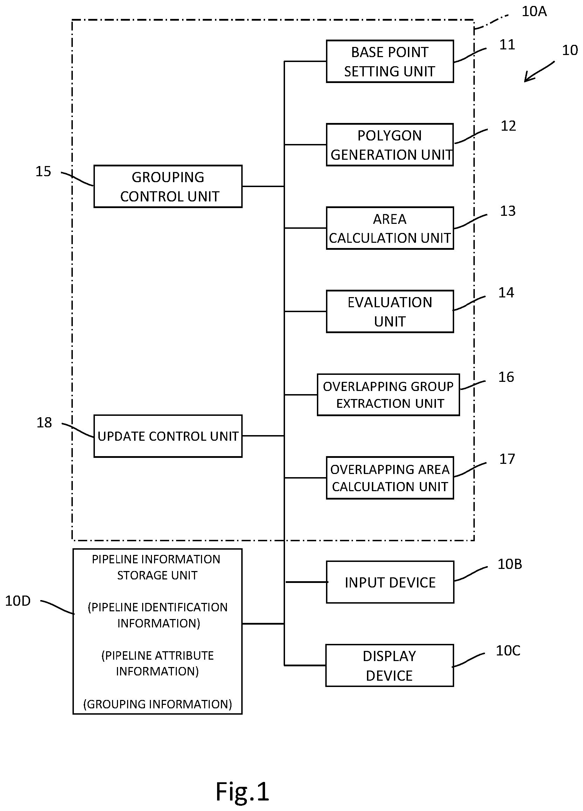

Fig. 1 illustrates a configuration of functional blocks of a pipeline grouping apparatus 10. The pipeline grouping apparatus 10 includes a computer main body 10A, and an input device 10B, a display device 10C, a pipeline information storage unit 10D, etc. that are coupled to the computer main body 10A.

As the computer main body 10A, a general-purpose personal computer or laptop computer, etc. is suitably used. As the input device 10B, a pointing device such as a mouse, a keyboard, or the like is suitably used. As the display device 10C, a touch panel LCD display, a printer, or the like is suitably used. As the pipeline information storage unit 10D, a hard disk or the like is suitably used. In an alternative implementation, the pipeline information storage unit 10D may be built in a database server at a remote location and connected to the computer main body 10A via a communication medium such as the Internet.

Stored in the pipeline information storage unit 10D is pipeline information associating pipeline identification information for individually identifying a plurality of pipelines constituting a pipe network with pipeline attribute information including position information on each pipeline. The position information on the pipeline refers to coordinate information indicating a pipe end position, a center position along a pipe axis, a position of a bending point, etc., specifically, two-dimensional coordinates obtained by projecting three-dimensional coordinates of X, Y, and Z indicating an installation position onto an X-Y horizontal plane. In addition to the position information, the pipeline attribute information includes an installation date, a nominal diameter, a pipe type, a joint type, a type of an external corrosion protection method (with or without polyethylene sleeving), presence or absence of a pipe targeted for renewal, presence or absence of repaired water leakage, pipeline length, renewal history, etc. Based on the renewal history, timing and necessity of pipeline replacement in the future, etc. are determined.

The computer main body 10A is equipped with a CPU board, a memory board, and various interface boards such as an input/output interface and a communication interface. A CPU, which operates based on an operation system program stored in a memory of the memory board, executes an application program also stored in the memory of the memory board to realize the intended functions. In this example, a pipeline grouping program is stored in the memory as an application program to configure the pipeline grouping apparatus 10 and cause the CPU to execute a pipeline grouping method. The application program is prestored in a recording medium such as a CD-ROM and read by the computer main body 10A into the memory of the memory board.

The pipeline grouping apparatus 10 includes respective functional blocks of a base point setting unit 11, a polygon generation unit 12, an area calculation unit 13, an evaluation unit 14, a grouping control unit 15, an overlapping group extraction unit 16, an overlapping area calculation unit 17, and an update control unit 18.

The base point setting unit 11 is a functional block to set a base point for grouping to any of a plurality of pipelines to be grouped based on management information stored in the pipeline information storage unit 10D.

The polygon generation unit 12 is a functional block to repeat a process of generating a polygon of a prescribed shape encompassing one pipeline including the base point and a candidate pipeline adjacent to the base point until a preset specified condition is satisfied, and once the specified condition is satisfied, group each pipeline encompassed by the generated polygon into a same group. The term "encompass" refers to a state in which each pipeline is inside a polygon of a maximum shape obtained by connecting the position information on each pipeline.

At least any of the following indicators is used as the specified condition: whether a total pipeline length of pipelines included in the polygon reaches a set pipeline length, or whether a construction cost for the pipelines included in the polygon reaches a set construction cost. Note that the construction cost can be easily determined by multiplying a construction cost per unit length (if set in advance) by the pipeline length. However, the method for calculating the construction cost is not limited to this.

The area calculation unit 13 is a functional block to calculate an area of a polygon generated by the polygon generation unit. The evaluation unit 14 is a functional block to calculate an evaluation coefficient to evaluate suitability of grouping in consideration of the area calculated by the area calculation unit 13 as well as the total pipeline length of the pipelines included in the polygon.

The grouping control unit 15 is a functional block to control respective operations of the base point setting unit 11, the polygon generation unit 12, the area calculation unit 13, and the evaluation unit 14 in an integrated manner, and mainly controls to repeatedly operate the base point setting unit 11 and the polygon generation unit 12.

That is, the grouping control unit 15 controls to initially operate the base point setting unit 11 and the polygon generation unit 12 to complete a first grouping process, thereafter update and set a new base point for grouping to any of a plurality of ungrouped pipelines adjacent to the previously set base point via the base point setting unit 11 each time one grouping by the polygon generation unit 12 is completed, and repeat execution of the polygon generation unit based on the updated and set base point until all the pipelines constituting the pipe network are grouped into any group.

By the way, the presence of any overlapping area between polygons of adjacent groups does not always allow for efficient progress of the construction work and may rather make the construction work more time consuming. For example, if construction work is performed on different construction schedules in a zone with complicated pipelines belonging to different groups, traffic control may be necessary for a long period of time, and inconvenient situations may also arise such as requiring repeated excavation and backfilling in overlapping construction zones.

To deal with such cases, the pipeline grouping apparatus 10 includes the overlapping group extraction unit 16, the overlapping area calculation unit 17, and the update control unit 18. The overlapping group extraction unit 16 is a functional block to extract, after grouping of all the pipelines constituting the pipe network into any group by the grouping control unit 15, a plurality of groups whose polygons are overlapping each other, where each of the polygons encompasses pipelines belonging to the same group.

The overlapping area calculation unit 17 is a functional block to calculate an overlapping area between overlapping polygons extracted by the overlapping group extraction unit 16. The update control unit 18 is a functional block to activate the grouping control unit 15 to regroup the pipelines encompassed by the overlapping polygons if the overlapping area calculated by the overlapping area calculation unit 17 satisfies a first specified condition.

The overlapping area calculation unit 17 includes a process of calculating the coordinates of intersections of the overlapping polygons, based on the position information on the pipelines present on the outline of each polygon. While the position information (installation information) on each pipeline is managed in the pipeline information storage unit 10D, the coordinates of intersections of the overlapping regions are unknown. Thus, the outline of the polygon of each group can be defined by a mathematical formula based on the known position information (installation information) on the pipelines belonging to each group. The coordinates of intersections of the overlapping polygons can be determined from the mathematical formula defining the outline, and the area of the overlapping region is determined based on the coordinates of intersections.

Preferably, the first specified condition is defined by whether an area ratio Sd/S2 of an area Sd of the overlapping region to an area S2 of the polygon with the smaller area of the two overlapping polygons with areas S1, S2 (S1 > S2) extracted by the overlapping group extraction unit 16 is greater than a prescribed threshold.

By using the above area ratio Sd/S2 as the condition for determining whether to regroup the pipelines, the coverage of the other polygon over the construction zone indicated by the polygon with the smaller area can be evaluated. If the coverage is large, it can be evaluated that efficient construction work is impossible, and if the coverage is small, it can be evaluated that efficient construction work is possible. In the present embodiment, the threshold coverage is set to 20%. If the area ratio of the area of the overlapping region to the area of the polygon with the smaller area is greater than 20%, the update control unit 18 activates the grouping control unit 15. Note that the value of the coverage is not limited to 20% and may be set as appropriate according to the actual situation.

That is, for all the pipelines that constitute two groups with an area ratio of greater than 20%, the base point setting unit 11, the polygon generation unit 12, the area calculation unit 13, and the evaluation unit 14 described above are repeatedly activated to execute a new grouping process. The first base point to be set by the base point setting unit 11 may be, for example, a base point of the group corresponding to the polygon with the smaller area.

If there are three or more overlapping polygons, the above evaluation is performed for each two of these overlapping polygons.

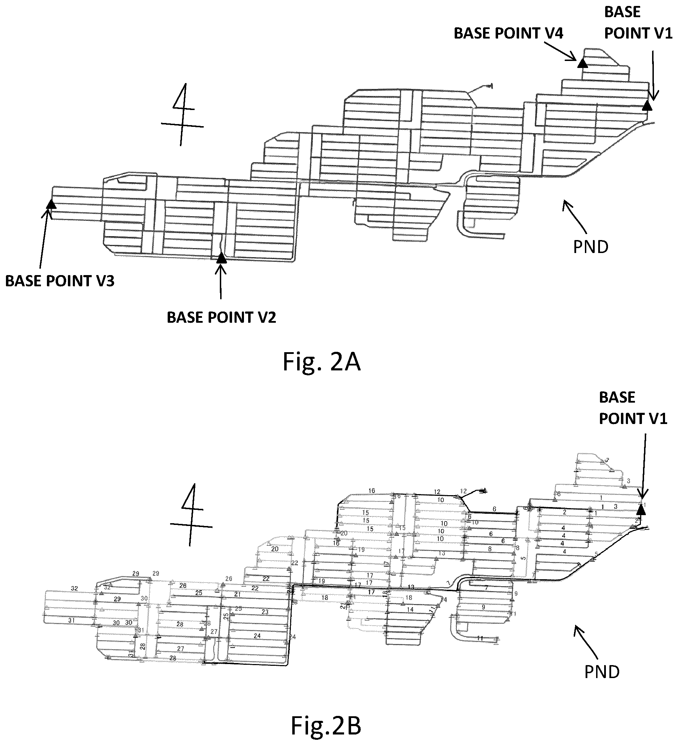

Fig. 2A illustrates a pipe network diagram PND to be grouped. In Fig. 2A, black triangle marks indicated as base points V1 to V4 are first base points to be set by the base point setting unit 11, and are set at a plurality of positions at the ends of the pipe network, i.e. positions in east, west, north, and south distant from each other in this example. By executing the grouping process from each base point, four grouping pattern results are ultimately obtained. The base point is set at the end of the pipe network because it is efficient to perform grouping in a direction from the end toward the pipe network side. However, it is also possible to set the base point at the center of the pipe network and perform grouping in a radial direction.

In Fig. 2B, a grouping result for the base point V1 is shown with pipelines color-coded by each group and numerical values indicative of each group. Note that Fig. 2B is shown in grayscale, so the pipelines color-coded by each group are shown with shading. Such grouping pattern is also generated for base points V2, V3, and V4, and the grouping control unit 15 determines one of the four grouping patterns based on the evaluation coefficients calculated by the evaluation unit 14. Note that a plurality of base points is not necessarily set in the pipe network diagram to be grouped, and a single base point V1 may be set.

### [Description of Pipeline Grouping Method]

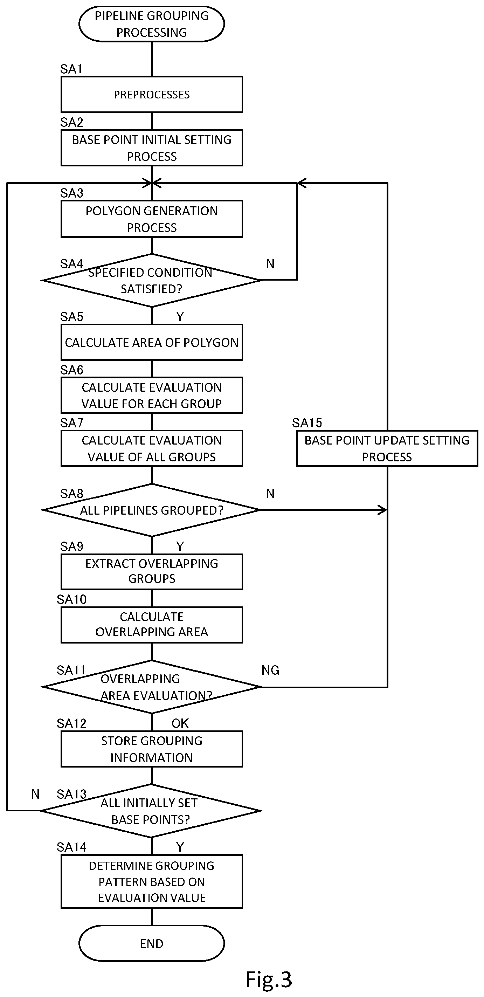

Hereinafter, by taking a case where the base point set by the base point setting unit 11 corresponds to the base point V1 shown in Fig. 2A as an example, a procedure of pipeline grouping processing executed by the pipeline grouping apparatus 10 will be specifically described based on the flowchart shown in Fig. 3, etc.

Firstly, a series of preprocesses as described below is executed by the grouping control unit 15 (SA1).

If the pipe network is a large-scale pipe network including a plurality of water systems, it is preferable to divide the pipe network into a plurality of parts according to the water systems and perform the grouping processing on each of the divided pipe network rather than performing the grouping processing on the entire pipe network at once, in view of, among others, avoiding a decrease in renewal construction work efficiency. When formulating an actual pipeline renewal plan, it has been a common practice to group pipelines by water system, and it has been necessary to ensure that no single group crosses over multiple water systems, i.e., that pipelines constituting a group do not include those from different water systems. Also, performing the grouping processing on the entire pipe network at once may lead to longer computation time of the pipeline grouping apparatus 10, potentially resulting in a decrease in efficiency. Thus, the pipe network shown in Fig. 2A is a pipe network divided to include one water system.

Both ends of a unit pipeline constituting the pipe network are either an intersection with other pipelines or a connection point to a valve. Upon grouping such unit pipeline, a pipeline unit is configured with a plurality of pipelines combined in advance such that both ends become the connection point to a valve, and the grouping per pipeline unit is performed, thereby enabling to improve efficiency.

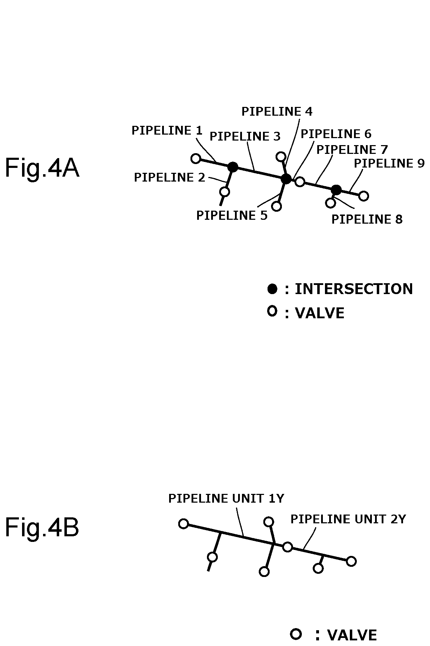

Fig. 4A illustrates a part of the pipe network where a plurality of unit pipelines (pipelines 1 to 9) is coupled to each other. In the figure, a black circle indicates an intersection and a white circle indicates a valve. A pipeline having valves at both ends is formed from a pipeline group made of these pipelines 1 to 9, and regarded as the pipeline unit.

Fig. 4B illustrates two pipeline units Y1, Y2 formed based on the pipelines 1 to 9. In this manner, a plurality of pipeline units is formed by starting from one unit pipeline and connecting the intersections. Note that efficiency of the subsequent grouping processing decreases if short-distance pipeline units are dispersed, and therefore it is preferable to integrate a pipeline unit having a shorter length than a prescribed length into another pipeline unit coupled via a valve in advance.

Such grouping per pipeline unit has an advantage that water stop treatment through each valve becomes easy in actual replacement work. Although the grouping processing executed on the pipeline unit as the "pipeline" is described below, the grouping processing on the unit pipeline is, of course, also possible, not to mention that the procedure thereof is basically the same.

An installation year of each unit pipeline of the pipeline (pipeline unit) obtained in this manner is obtained from the pipeline information on the unit pipeline; a ratio A1/A2 of a total pipeline length A1 of the pipelines installed before a prescribed installation year to a total pipeline length A2 of all the unit pipelines constituting the pipeline (pipeline unit) is calculated; and the pipeline (pipeline unit) with the ratio equal to or greater than a prescribed ratio is selected as the pipeline (pipeline unit) to be subjected to the grouping processing. Specific values of the prescribed installation year and the prescribed ratio are not particularly limited and may be set as appropriate.

Since construction types of a water distribution branch pipe and a main pipeline are different from each other, the pipeline (pipeline unit) may be divided in advance into the water distribution branch pipe (for example, a nominal diameter of equal to or less than 250) and the main pipeline (for example, a nominal diameter of equal to or greater than 300), for example, to respectively perform the grouping processing.

After the preprocesses described above, the grouping control unit 15 activates the base point setting unit 11 to execute a base point initial setting process (SA2). By this process, the base point V1 shown in Fig. 2A is set. In the present embodiment, described is an aspect where a valve position at the end of the pipeline (pipeline unit) is selected as the base point V1, but any coordinate information such as a pipe end, a center along a pipe axis, and a bending point may be set as the base point V1.

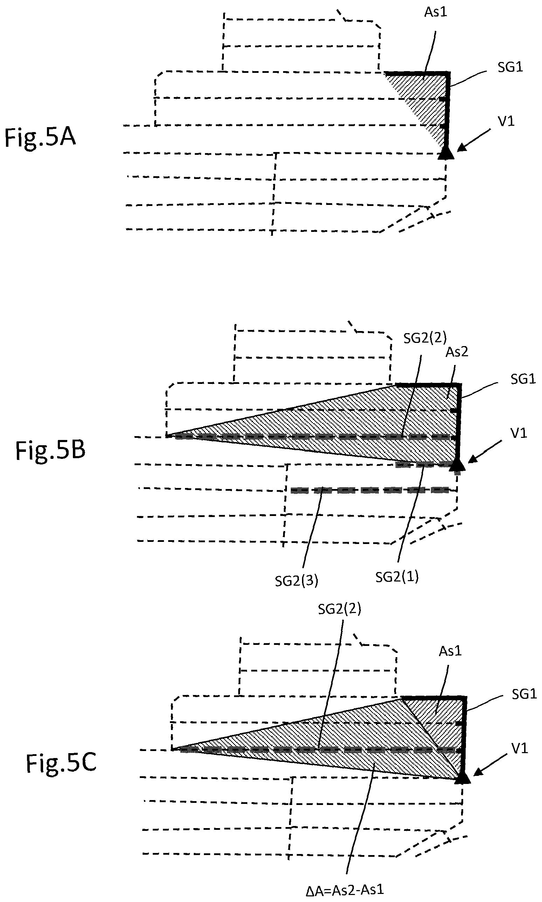

Next, the polygon generation unit 12 is activated by the grouping control unit 15, and among a plurality of pipelines (pipeline units) including the base point V1, one pipeline (pipeline unit) SG1 having a longest pipe extension is incorporated into a first pipeline (pipeline unit) to be grouped as shown in Fig. 5A. The sign As1 indicates an area of a polygon of a prescribed shape that encompasses one pipeline (pipeline unit) SG1. Note that also in a case of grouping a unit pipeline, it may be configured to incorporate one unit pipeline having a longest pipe extension among a plurality of unit pipelines including the base point V1 in a first unit pipeline to be grouped.

Furthermore, as shown in Fig. 5B, the polygon generation unit 12 picks up the prescribed number of pipelines (pipeline units) near the base point V1 as candidate pipelines SG2 (SG2(1), SG2(2), SG2(3)); respectively calculates an area As2 of a polygon encompassing one pipeline (pipeline unit) SG1 and each of the candidate pipelines SG2 (SG2(1), SG2(2), SG2(3)); and selects, as a next pipeline (pipeline unit), and groups the candidate pipeline SG2 with a smallest ratio [increased area/additional pipe extension] of an area increment ΔA (= As2 - As1) due to each of the candidate pipelines SG2 (SG2(1), SG2(2), SG2(3)) to the pipe extension of each of the candidate pipelines SG2. In this example, as shown in Fig. 5C, the candidate pipeline SG2(2) is selected as the next pipeline (pipeline unit).

In this example, the prescribed number is set to 3. Although the prescribed number may be set as appropriate, the linear candidate pipeline SG2 with a smaller value of [increased area/additional pipe extension] is more likely to be selected by increasing this number, resulting in a linear and distorted section of a pipeline to be grouped. In other words, the purpose is to avoid distorting a construction section in a case of pipe replacement per grouped pipeline.

The pipeline (pipeline unit) near the base point V1 is selected in order from the nearest pipeline (pipeline unit) based on the shortest distance between the base point V1 and each pipeline (pipeline unit).

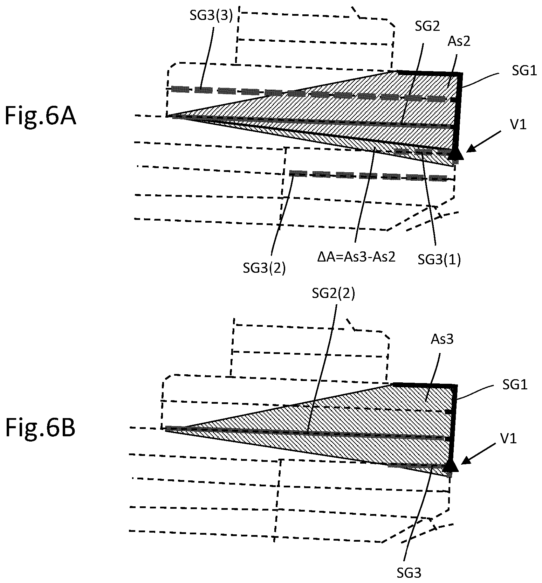

As shown in Figs. 6A and 6B, the polygon generation unit 12 picks up, based on the area As2 of the polygon that encompasses the pipelines (pipeline units) SG1, SG2 grouped for the base point V1, the prescribed number of pipelines (pipeline units) near the base point V1 as candidate pipelines SG3 (SG3(1), SG3(2), SG3(3)); calculates an area As3 of a polygon that encompasses the already grouped pipelines (pipeline units) SG1, SG2 and the candidate pipelines SG3 (SG3(1), SG3(2), SG3(3)); selects, as a next pipeline (pipeline unit), and groups the candidate pipeline SG3 with the smallest ratio [increased area/additional pipe extension] of an area increment ΔA (= As3 - As2) due to each of the candidate pipelines SG3 (SG3(1), SG3(2), SG3(3)) to the pipe extension of each of the candidate pipelines SG3.

The polygon process in step SA3 is repeated for the pipelines (pipeline units) SG1, SG2, ... incorporated in the same group until a specified condition is satisfied (SA4).

Whether a total pipeline length of pipelines included in the polygon reaches a set pipeline length is specified as the specified condition. The similar process is repeated until the total pipeline length in the group exceeds the set pipeline length, and when the total pipeline length exceeds the set pipeline length, pipelines up to the last pipeline (pipeline unit) SGn before the total pipeline length exceeds the set pipeline length are incorporated into the same group. The set pipeline length is set as appropriate based on a construction process of pipe replacement, etc.

Note that instead of the set pipeline length, whether a construction cost for the pipelines included in the polygon reaches a set construction cost may be specified as the specified condition. By specifying the construction cost required for replacement work of pipelines in one section, it is possible to properly manage the construction cost.

When the specified condition is satisfied (SA4, Y), the area calculation unit 13 activated by the grouping control unit 15 calculates an area AG of a polygon that encompasses all the pipelines incorporated into the same group (SA5), and the evaluation unit 14 calculates an evaluation value Vg per group, that is a value obtained by dividing the area Ag by a total pipeline length, i.e. a total length of pipelines belonging to the group (SA6). In other words, the area per unit pipeline length is the evaluation value Vg, and the smaller evaluation value Vg is evaluated as grouping processing with higher suitability.

Note that the evaluation value Vg may be a value obtained in consideration of the area Ag as well as the total pipeline length, but is not limited to the value obtained by dividing the area Ag by the total pipeline length included in the polygon.

Furthermore, each time a group that satisfies the specified condition is generated, an arithmetic average value of the respective evaluation values Vg for each group previously generated is calculated as an evaluation value VG of all the groups and stored in the pipeline information storage unit 10D (SA7). Note that when the first group is generated, the evaluation value Vg and the evaluation value VG of all the groups are the same value.

Each time a group satisfying the specified condition is generated by the polygon generation unit 12 and the evaluation value VG is calculated by the evaluation unit 14 (SA4, Y-SA7), the grouping control unit 15 determines whether all of the pipelines (pipeline units) constituting the pipe network are grouped into any group (SA8), and when there is an ungrouped pipeline (pipeline unit) (SA8, N), executes a base point update setting process via the base point setting unit 11 (SA15).

Once all the pipelines are grouped into any group (SA8, Y), the overlapping group extraction unit 16 determines whether there are groups whose polygons are overlapping each other, among the polygons each encompassing pipelines belonging to the same group. If there are such groups, the overlapping group extraction unit 16 extracts the groups corresponding to the overlapping polygons (SA9), and the overlapping area calculation unit 17 calculates the overlapping area (SA10).

The update control unit 18 evaluates the overlapping area calculated by the overlapping area calculation unit 17. If the overlapping area satisfies the first specified condition, i.e., if the area ratio of the area of the overlapping region to the area of the polygon with the smaller area of the two overlapping polygons is greater than the prescribed threshold (SA11, NG), the update control unit 18 activates the base point update setting process via the grouping control unit 15 to regroup the pipelines encompassed by the overlapping polygons (SA15). If the overlapping area does not satisfy the first specified condition, i.e., if the area ratio of the area of the overlapping region to the area of the polygon with the smaller area of the two overlapping polygons is smaller than the prescribed threshold (SA11, OK), the series of grouping processes is completed, and all generated grouping information is stored in the pipeline information storage unit 10D (SA12).

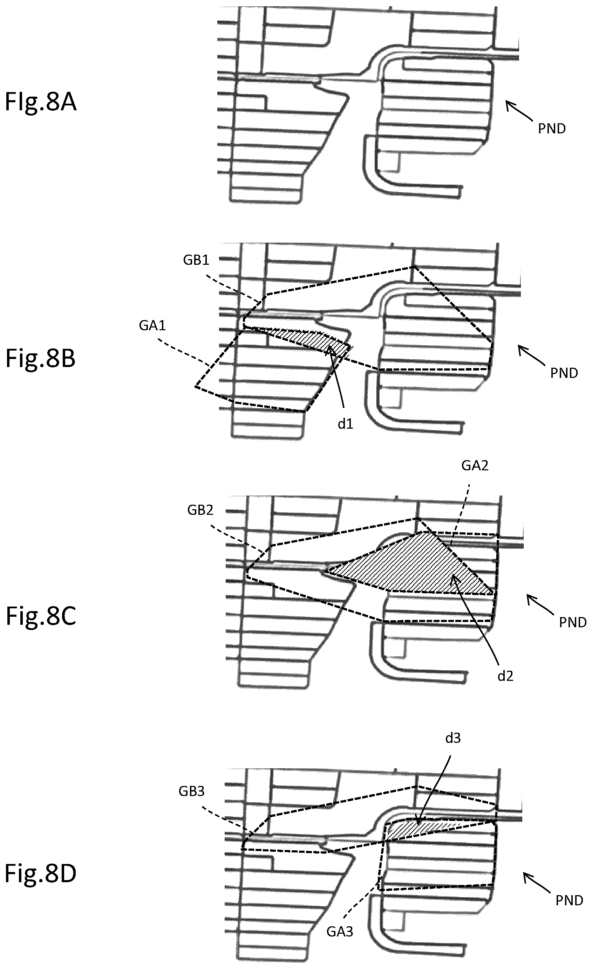

Fig. 8A illustrates a part of the pipe network PND before being grouped. Fig. 8B illustrates the pipe network PND where polygons corresponding to two groups GA1, GB1 are overlapping each other. Fig. 8C illustrates the pipe network PND where polygons corresponding to two groups GA2, GB2 are overlapping each other.

In Fig. 8B, the area S(GA1) of the polygon of the group GA1 and the area S(GB1) of the polygon of the group GB1 have a relationship of S(GA1) < S(GB1), and the area ratio S(d1)/S(GA1) of the area S(d1) of the overlapping region d1 (hatched in the figure) to the area S(GA1) of the smaller polygon is smaller than the threshold of 0.2 (= 20%).

In Fig. 8C, the area S(GA2) of the polygon of the group GA2 and the area S(GB2) of the polygon of the group GB2 have a relationship of S(GA2) < S(GB2), and the area ratio S(d2)/S(GA2) of the area S(d2) of the overlapping region d2 (hatched in the figure) to the area S(GA2) of the smaller polygon is greater than the threshold of 0.2 (= 20%).

In the example of Fig. 8B, the groups GA1, GB1 are maintained, while in the example of Fig. 8C, pipelines belonging to the groups GA2, GB2 are regrouped. Fig. 8D illustrates groups GA3, GB3 generated by the regrouping process. The area ratio of the overlapping area S(d3) between the groups GA3, GB3 to the area of the polygon with the smaller area is smaller than the threshold of 0.2 (= 20%).

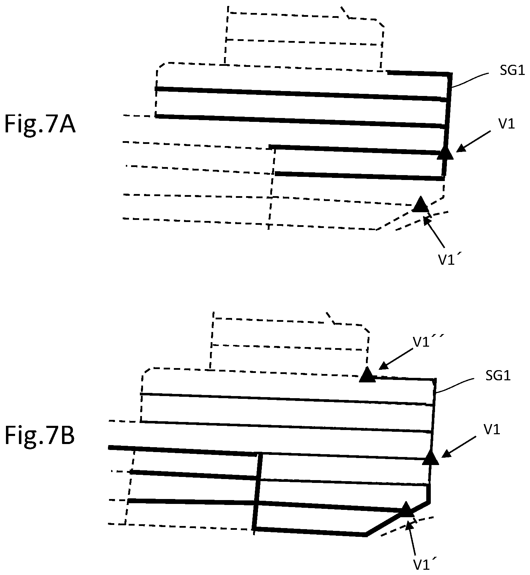

As shown in Fig. 7A, the base point update setting process is a process of updating and setting a base point for generating a new group, i.e. updating and setting, as a new base point V1', a valve position of a pipeline (pipeline unit) closest to the first base point V1 in a straight line, except the already grouped pipeline (pipeline unit) (SA15).

Then, based on the updated and set base point V1', the grouping processing from steps SA3 to SA8 described above is repeated.

Fig. 7B illustrates a state where the grouping processing based on the base point V1' is completed, and further a new base point V1" is updated and set.

In the above regrouping process, the base point initially set by the base point setting unit 11 is preferably that of the group corresponding to the polygon with the smaller area, but may be that of the group corresponding to the polygon with the larger area.

In this manner, once the grouping processing based on the base point V1 shown in Fig. 2A is completed, the similar grouping processing is executed based on the next base point V2, and the similar grouping processing is further executed based on the next base points V3, V4 (SA10).

When the grouping processing based on the four base points V1 to V4 is completed, the grouping control unit 15 refers to all the evaluation values for each group calculated in step SA7 and stored in the pipeline information storage unit 10D, and determines the grouping result with the highest evaluation value as a final grouping pattern (SA13).

As described above, the pipeline grouping method according to the present invention is a pipeline grouping method for executing a grouping control process of grouping a plurality of pipelines constituting a pipe network based on a prescribed indicator. The method includes: an overlapping group extraction process of extracting groups whose polygons are overlapping each other from groups grouped by the grouping control process, each of the polygons encompassing pipelines belonging to a same group; an overlapping area calculation process of calculating an overlapping area between overlapping polygons extracted by the overlapping group extraction process; and an update control process of regrouping, by a grouping control unit, pipelines encompassed by the overlapping polygons if the overlapping area calculated by the overlapping area calculation process satisfies a first specified condition.

The prescribed indicator is a total pipeline length or an installation cost of pipelines constituting a group. The pipeline grouping method further includes: a base point setting process of setting a base point for grouping to any of a plurality of pipelines to be grouped based on pipeline information associating pipeline identification information for individually identifying each pipeline constituting a pipe network with pipeline attribute information including position information on each pipeline; and a polygon generation process of repeating a process of generating a polygon of a prescribed shape encompassing one pipeline including the base point and a candidate pipeline adjacent to the base point until a preset second specified condition is satisfied, and once the second specified condition is satisfied, grouping each pipeline encompassed by the polygon into a same group. The grouping control process is configured to control to repeat a process of updating and setting a new base point for grouping to any of a plurality of ungrouped pipelines adjacent to the base point via the base point setting process, and the execution of the polygon generation process based on the updated and set base point each time one grouping is completed by the polygon generation process until all the pipelines constituting the pipe network and subject to grouping are grouped into any group.

The second specified condition is whether a total pipeline length has reached a set pipeline length or whether a construction cost for pipeline installation has reached a set construction cost.

The pipeline grouping program according to the present invention is a pipeline grouping program causing a computer to execute a grouping method for grouping a plurality of pipelines constituting a pipe network. The pipeline grouping program includes: a grouping control process of grouping the plurality of pipelines based on a prescribed indicator; an overlapping group extraction process of extracting groups whose polygons are overlapping each other from groups grouped by the grouping control process, each of the polygons encompassing pipelines belonging to a same group; an overlapping area calculation process of calculating an overlapping area between overlapping polygons extracted by the overlapping group extraction process; and an update control process of regrouping, by a grouping control unit, pipelines encompassed by the overlapping polygons if the overlapping area calculated by the overlapping area calculation process satisfies a first specified condition.

The foregoing embodiment is merely one aspect of the present invention and the description thereof is not intended to limit the technical scope of the present invention, not to mention that the specific configuration of each section can be modified and designed as appropriate to the extent that the operations and effects of the present invention can be obtained.

For example, of the pipeline grouping processing shown in Fig. 3, a series of processes from the pipeline grouping process in step SA3 to the grouping information storage process in step SA11 or a part thereof can be automated by using AI techniques such as genetic algorithm to determine an optimal combination.

In the above embodiment, pipelines constituting the pipe network are grouped based on a prescribed indicator, which is either a total pipeline length or an installation cost of pipelines constituting a group, for the purpose of reinstalling the pipelines. However, the present invention is not solely intended for the purpose of reinstalling the pipelines. For example, in an implementation where water distribution areas are managed in blocks to maintain a stable water pressure and residual chlorine level in each water distribution area, any of the elevation difference, dynamic pressure gradient, or residual chlorine level is preferably used as a prescribed indicator.

### Reference Signs List

10: pipeline grouping apparatus
10A: computer main body
10B: input device
10C: display device
10D: pipeline information storage unit
11: base point setting unit
12: polygon generation unit
13: area calculation unit
14: evaluation unit
15: grouping control unit
16: overlapping group extraction unit
17: overlapping area calculation unit
18: update control unit
V1: base point

## Claims

1. A pipeline grouping apparatus including a grouping control unit configured to group a plurality of pipelines constituting a pipe network based on a prescribed indicator, comprising:
an overlapping group extraction unit configured to extract groups whose polygons are overlapping each other from groups grouped by the grouping control unit, each of the polygons encompassing pipelines belonging to a same group;
an overlapping area calculation unit configured to calculate an overlapping area between overlapping polygons extracted by the overlapping group extraction unit; and
an update control unit configured to regroup, by the grouping control unit, pipelines encompassed by the overlapping polygons if the overlapping area calculated by the overlapping area calculation unit satisfies a first specified condition.

2. The pipeline grouping apparatus according to claim 1, wherein the overlapping area calculation unit includes a process of calculating coordinates of an intersection of the overlapping polygons based on position information on the pipelines present on an outline of each of the polygons.

3. The pipeline grouping apparatus according to claim 1, wherein the first specified condition is defined by an area ratio of an area of an overlapping region to an area of a polygon with a smaller area of two overlapping polygons extracted by the overlapping group extraction unit.

4. The pipeline grouping apparatus according to any one of claims 1 to 3, wherein the prescribed indicator is any of a total pipeline length, an installation cost, an elevation difference, a dynamic pressure gradient, or a residual chlorine level of pipelines constituting a group.

5. The pipeline grouping apparatus according to claim 1, wherein
the prescribed indicator is a total pipeline length or an installation cost of pipelines constituting a group,
the pipeline grouping apparatus further comprises:
a base point setting unit configured to set a base point for grouping to any of a plurality of pipelines to be grouped based on pipeline information, the pipeline information associating pipeline identification information for individually identifying each pipeline constituting the pipe network with pipeline attribute information including position information on each pipeline; and
a polygon generation unit configured to repeat a process of generating a polygon of a prescribed shape encompassing one pipeline including the base point and a candidate pipeline adjacent to the base point until a preset second specified condition is satisfied, and once the second specified condition is satisfied, group each pipeline encompassed by the polygon into a same group, and
the grouping control unit is configured to control to repeat update setting of a new base point for grouping to any of a plurality of ungrouped pipelines adjacent to the base point via the base point setting unit, and execution of the polygon generation unit based on the updated and set base point each time one grouping is completed by the polygon generation unit until all the pipelines constituting the pipe network and subject to grouping are grouped into any group.

6. A pipeline grouping method for executing a grouping control process of grouping a plurality of pipelines constituting a pipe network based on a prescribed indicator, comprising:
an overlapping group extraction process of extracting groups whose polygons are overlapping each other from groups grouped by the grouping control process, each of the polygons encompassing pipelines belonging to a same group;
an overlapping area calculation process of calculating an overlapping area between overlapping polygons extracted by the overlapping group extraction process; and
an update control process of regrouping, by the grouping control process, pipelines encompassed by the overlapping polygons if the overlapping area calculated by the overlapping area calculation process satisfies a first specified condition.

7. A pipeline grouping program causing a computer to execute a grouping method for grouping a plurality of pipelines constituting a pipe network, the program comprising:
a grouping control process of grouping the plurality of pipelines based on a prescribed indicator;
an overlapping group extraction process of extracting groups whose polygons are overlapping each other from groups grouped by the grouping control process, each of the polygons encompassing pipelines belonging to a same group;
an overlapping area calculation process of calculating an overlapping area between overlapping polygons extracted by the overlapping group extraction process; and
an update control process of regrouping, by the grouping control process, pipelines encompassed by the overlapping polygons if the overlapping area calculated by the overlapping area calculation process satisfies a first specified condition.
